Europäisches Patentamt

European Patent Office

Office européen des brevets

(19)

(11) Numéro de publication: **0 293 539 B1**

(12)

# FASCICULE DE BREVET EUROPEEN

(45) Date de publication de fascicule du brevet: **08.06.94**  (51) Int. Cl.5: **C08B 37/10**, A61K 31/725

(21) Numéro de dépôt: **87500051.5**

(22) Date de dépôt: **22.07.87**

(54) **Procédé pour la dépolymérisation de l'héparine pour l'obtention d'une héparine de bas poids moléculaire dotée d'une activité antithrombotique.**

(30) Priorité: **05.01.87 ES 8700020**

(43) Date de publication de la demande:
**07.12.88 Bulletin 88/49**

(45) Mention de la délivrance du brevet:
**08.06.94 Bulletin 94/23**

(84) Etats contractants désignés:
**AT BE CH DE FR GB GR IT LI LU NL SE**

(56) Documents cités:
**EP-A- 0 040 144**

**CONNECTIVE TISSUE RESEARCH, vol. 3, 1975, pages 73-79, Gordon and Breach Science Publishers Ltd, Londres, GB; S. HIRANO et al.: "Depolymerization and DE-N-acetylation of glycosaminoglycuronans by the action of alkali in the presence of sodium borohydride"**

(73) Titulaire: **LABORATORIOS FARMACEUTICOS ROVI, S.A.**
**35, calle Julian Camarillo**
**E-28037 Madrid(ES)**

(72) Inventeur: **Lopez Belmonte, Lorenzo**
**35, Julian Camarillo**
**E-28037 Madrid(ES)**

Rank Xerox (UK) Business Services
(3.10/3.09/3.3.3)

EP 0 293 539 B1

**EP 0 293 539 B1**

**Description**

La présente invention se rapporte à un nouveau procédé de dépolymérisation de l'Héparine. Il consiste particulièrement à préparer un Héparine de bas poids moléculaire, constitué par un mélange de fragments d'Héparine de composition optimale, capable de refouler sélectivement quelques facteurs de la coagulation. L'invention concerne également les produits résultants de l'application du procédé.

L'Héparine est un mucopolysaccharide sulfaté d'origine animale, extrait de l'intestin et du poumon de mammifère (vache, mouton, porc) et utilisée depuis longtemps dans la thérapie humaine pour la prévention et le traitement des maladies thromboemboliques.

C'est un fait, que l'utilisation de l'Héparine s'accompagne d'effets hémoragiques très désagréables et que l'emploi quotidien, trois piqûres subcutanées ou intraveineuses constituent un inconvénient considérable.

Actuellement, il est admis que l'activité antithrombotique de l'Héparine est due principalement à sa capacité d'activer l'antithrombine III, protéine du plasma, puissant inhibiteur du facteur X activé et de la thrombine.

De sorte qu'il est possible de mesurer au moyen de tests spécifiques de l'inhibition de ces facteurs.

On sait également que les Héparines courament utilisées thérapeutiquement sont des mélanges de chaines polysaccharides diversement sulfatées, de longueur variables, contituées par l'enchainement d'unités de Glucosamine et d'Acides Idoroniques ou Glucoronique. Le poids moléculaire moyen de ces Héparines varie de 12.000 à 18.000 daltons et les valeurs extrêmes de ces chaines courtes et longues s'étendent entre les 3.000 et les 40.000 daltons.

Les investigations réalisées par les differents auteurs ces dernières années, montrent que les fractions de l'Héparines constituées par des chaines courtes et de poids moléculaires moyen compris entre les 4.000 et les 6.000 daltons, possèdent une action selective sur le facteur Xa et ont peu d'effet sur la coagulation globale mesurée avec des procédés pharmacologiques. De plus, on a constaté que ces fractions de bas poids moléculaire employées par voie subcutanée ont une action moléculaire plus durable que l'Héparine et cela se traduit par une activité plasmatique plus longue, mesurée par un test d'activité anti-facteur Xa.

D'autre part, une démonstration faite dit que ces fractions produisent des effets hémoragiques beaucoup plus bas que l'Héparine. Ces résultats expérimentaux ont été confirmés par de nombreux essais cliniques qui ont prouvé que les Hèparines de bas poids moléculaire, sont efficaces pour la prévention de thrombose postopératoire quand on prend de 20 à 40 mg environ par jour, et qu'ils induisent moins d'effets hémoragiques que l'Héparine conventionelle.

On sait depuis longtemps que les fractions d'Héparine de bas poids moléculaire peuvent s'obtenir par filtration sur le gel Sephadex ou Bio-Gel d'une Héparine commerciale. La préparation par hydrolyse enzymatique est également bien connue, au milieu d'Héparinase, des produits de dépolymérisation de l'Héparine avec un poids moléculaire et avec un activité coagulante de 70 unités U.S.P. environ. Tout au long de ces dernières années divers moyens chimiques ont été utilisés pour la dépolymérisation de l'Héparine.

Traitement avec Nitrite sodique au milieu d'acide, traitement alcalin d'ester, utilisation de radicaux libres engendrés en présence d'eau oxygénée. Ces moyens permettent d'obtenir, avec des rendements variables, des mélanges de fragments d'Héparine dans lesquels le poids moléculaire moyen et l'activité anticoagulante varient selon le procédé et les conditions de l'opération.

Les études effectuées par la demanderesse ont mené à une mise au point d'un nouveau procédé de dépolymérisation d'une héparine de poids moléculaire moyen compris entre 10.000 et 20.000 daltons, pour obtenir un produit dépolymérisé de poids moléculaire moyen compris entre 2.500 et 6.000 daltons caracterisé en ce qu'on traite un sel d'ammonium quaternaire d'Héparine avec un hydroxyde d'ammonium quaternaire, dans un solvant non aqueux inerte, la réaction s'effectuant à une temperature comprise entre 10°C et 60°C, et en ce qu'on isole le produit de la reaction sous forme de sel alcalin ou alcalino-terreux.

Ce procédé consiste à traiter un sel d'ammonium quaternaire dans un solvant propre, par un hydroxyde d'ammonium quaternaire. Le sel d'ammonium quaternaire d'Héparine s'obtient par la salification compléte des groupes sulfatés, sulfamides et carboxylase de l'Héparine par un ammonium quaternaire. L'Hydroxyde d'ammonium quaternaire peut être un produit de commerce, comme l'hydroxyde de benciltrimetilammonium (Triton B), ou un autre hydroxyde en solution alcoolique, comme le methanol, ethanol ou isopropanol. Cet hydroxyde peut s'obtenir facilement à partir d'un halogène d'ammonium quaternaire par une réaction d'échange sur un échangeur d'ions.

Comme les sels d'ammonium quaternaire d'Héparine, il est préférable utiliser des sels d'ammonium de chaine longue comme le citilpiride, didecildimetilamoniaque, benzetone.

2

Les solvants préfèrentiellement utilisés dans les réactions de dépolymerisation sont le diclorométane, la formamide, le dimethylformamide ou n'importe quel autre solvant qui soit polaire non hydroxylé.

Les conditions opératoires, surtout la température, la durée de la réaction et la quantité d'hydroxyde permettent d'obtenir le grade de dépolymérisation souhaité.

Aprés la réaction, les produits obtenus de la précipitation s'isolent, par une solution alcoolique d'un sel alcalin ou alcalino-terreux. On peut également fractionner les produits obtenus par les moyens habituels de précipitation fractionnée par ultrafiltration ou par chromatographie.

Ce procédé original, objet de la présente demande, se différencie des autres procédés chimiques connus jusqu'à ce jour, car il se développe dans un milieu non aqueux, dans un solvant inerte et dans des conditions qui peuvent être extrémement douces. Un des avantages de ce procédé est qu'il ne dégrade pas le lien actif de la molécule d'Hèparine et qu'il ne provoque pas de réaction secondaire de désulfatation. Un autre avantage est que les fragments d'Héparine de bas poids moléculaire qui n'ont aucune activité biologique, s'éliminent automatiquement dans l'étape finale de la précipitation, de sorte que le produit obtenu présente une composition optimale, réglée par les conditions opératoires, en fonction du poids moléculaire moyen désiré.

De plus, le réactif principal de la réaction, c'est à dire, l'hydroxyde d'ammonium quaternaire, ne précipite et ne tache pas le produit final.

Les mélanges d'oligosaccharides obtenus selon le procédé revendiqué peut être fractionné par des méthodes connues: précipitation fractionnée, chromatographie, ultrafiltration.

Il est également très avantageux de soumettre ces produits à l'action douce d'un agent réducteur comme le borohydrure de sodium ou de potasium, pour que les groupes terminaux se stabilisent.

Les compositions resultantes de l'application du procédé revendiqué peuvent s'obtenir à partir d'Héparine de divers origines (vache, porc, mouton), de qualité courante ou bien avec des caracteristiques particulières, comme une activité spécifique superieur à 220 unités U.S.P. Ces compositions sont constituées par des oligosaccharides dans lesquels le poids moléculaire varie de 1.200 à 15.000 daltons. Les compositions utilisées pour la prevention et le traitement des maladies thromboemboliques auront un poids moléculaire moyens compris entre 2.500 et 5.500 daltons préférablement. Les produits seront administrés sous la forme de sels pharmacologiquement acceptables, comme le sel sodique, calcique ou de magnesium.

La dose quotidienne pour la prévention des thromboses post-opératoires sera d'environ 20 à 60 mg, avec un rythme d'administration subcutané par jour. Ces produits peuvent egalement s'utiliser pour le traitement des hyperlipemies et comme antiinflamatoir.

Les exemples ci-joints illustrent l'invention.

Exemples illustratifs

Exemple 1

Dissoudre 10 mg d'Héparine de Bencetone dans 50 ml de diclorométhane et ajouter 2 ml d'une solution d'hydroxyde de benciltrimethylammonium (Triton B) à 40% dans le methanol. Laisser reposer la solution 24 heures à température ambiante et ajouter ensuite 2 ml de solution de Triton B. Aprés 24 heures de repos, ajouter 50 ml d'une solution d'acétate de sodium au 10% dans le methanol. Le précipité se reprend par filtration, lavé au methanol et séché. On obtient 2,9 g d'Héparine dépolymerisée.

Exemple 2

Dissoudre 10 g d'Héparine de bencetone dans 50 ml de dichlorométhane et ajouter 2 ml d'une solution de Triton B à 40% dans le méthanol. Cette solution doit bouillir durant 6 heures, ensuite laisser reposer à température ambiante. Precipiter ajoutant 50 ml d'une solution au 10% d'acétate sodique dans le méthanol. Isoler le precipité par filtration. Laver avec le méthanol et laisser sécher. On obtient 2,5 g.

Exemple 3

Il s'agit d'une solution de 10 g d'Héparinate de bencetone avec 50 ml de dichloromethane par 2 ml d'une solution de Triton B à 50% dans le methanol, durant 24 heures à 30°C. Aprés rajouter 2 autres ml de solution Triton B et laisser reposer 24 heures à 30°C. De noveau réaliser la méme opération et aprés ajouter 50 ml d'une solution d'acétate de calcium à 10% de methanol. Le precipité se reprend par filtration, laver avec le methanol et dissoudre dans 50ml d'eau. Ajouter 10 ml d'une solution à 5% de borohydrure de sodium et laisser à température ambiante durant 24 heures. Filtrer la solution, ajouter 6 g de chlorure calcique filtré et précipiter en ajoutant 200 ml de methanol. Il s'isole par filtration, laver avec le methanol et laisser sécher au vide. On obtient 2,5 g d'Héparine dépolarisée sous forme de sel calcique dans ces exemples. L'Héparine de benzal utilisé à été préparé à partir d'une Héparine de porc, dont l'activité est de 165 unités U.P.S.

Analyse des produits

Les produits peuvent s'analyser selon les techniques d'analyse de l'Héparine. Cependant, et en raison dus bas poids moléculaire, ils ont des caracteristiques particulières qui seront mentionnées dans des exemples illustratifs. Le poids moléculaire moyen est mesuré par le gel-chromatographie selon le procédé de E.A. Johnson et al. (Carbohydrate Research, SI, II9-127, I176).

L'activité anti-facteur Xa est déterminée sur un plasma humain selon le méthode amidolitique décrite par TEIEN et al. (Thrombosis Research, 8, 413, 1976), en utilisant les reactifs contenus dans le kit commercialisé par la boite KABI. L'activité est exprimée en unités/mg, en ayant comme référence la 4ème marque internationale d'Héparine à laquelle s'attribue le titre de 177 U/mg. L'activite coagulante globale est exprimée en unité U.S.P. et mesurée de la même façon que pur l'Héparine.

Les autres caracteristiques se determinent selon les méthodes de la pharmacologie americaine U.S.P. XIX. Les resultats suivants donnent à titre informatif.

|  | Ex. 1 | Ex. 2 | Ex. 3 |
|---|---|---|---|
| Poids moléculaire moyen (daltons) | 6.000 | 5.000 | 4.600 |
| Pouvoir rotatoire | + 41° | +40,5° | + 40° |
| Teneur en soufre | 11,5 | 11,6 | 11,5 |
| Teneur en azote | 2,1 | 2,05 | 2,2 |
| Activité anti-Xa | 140 | 125 | 103 |
| Activité anticoagulante U.S.P. | 65 | 55 | 50 |

Activite pharmacologique

L'activité antithrombotique des produits est determinée sur des animaux sur un modèle de thrombose veineuse, selon le procédé de REYERS (Thrombosis Research, 18.669-674, 1.980). Le modèle experimental consiste à mesurer l'effet protecteur d'un produit sur la formation d'une thrombose induite par la ligature de la veine cave d'un rat. On utilise des doses de 0 à 1 mg/kg administrées par voie veineuse 10 mn avant la ligature. L'efficacité d'un produit s'exprime par son DE50 déduit de la courbe qui représente la variation du poids du tronc en fonction de la dose.

Les résultats suivants sont obtenus:

|  | DE50 (mg/kg) |
|---|---|
| **Produit de l'exemple 1** | **0,20** |
| " " 2 | **0,35** |
| " " 3 | **0,30** |

On constate donc que les produits de l'invention exercent une activite anti-thrombotique importante.

Durée de l'action

Aussi les produits comme l'Héparine commerciale ont été administrés en primate par voie subcutanée en dose de 1 mg/kg, des prises de sang ont été faites durant 24 heures. L'activité anti-Xa est mesurée dans le plasma en utilisant les indications et les réactifs du kit commercial KABI. Les résultats suivant correspondent au produit de l'example 3 et à l'Héparine. Ils représentent la moyenne de 5 animaux.

| TEMPS | ACTIVITE ANTI-Xa | |
|---|---|---|
| | Héparine | Produit Ex. 3 |
| 0 | 0 | 0 |
| 3 h | 20 | 70 |
| 6 h | 5 | 60 |
| 9 h | 0 | 45 |
| 12 h | --- | 20 |
| 24 h | --- | 10 |

Nous croyons donc que la durée de l'action du produit de l'exemple 3 est beaucoup plus longue que celle de l'Héparine et s'etend à 24 heures.

Toxicité

La toxicité aigüe des produits est mesurée sur le rat. La dose létale DL50 par voie veineuse est supérieur à 1600 mg/kg.

**Revendications**

**1.** Procédé de dépolymérisation d'une héparine de poids moléculaire moyen compris entre 10.000 et 20.000 daltons, pour obtenir un produit dépolymérisé de poids moléculaire moyen compris entre 2.500 et 6.000 daltons caracterisé en ce qu'on traite un sel d'ammonium quaternaire d'héparine avec un hydroxyde d'ammonium quaternaire, dans un solvant non aqueux inerte, la réaction s'effectuant à une température comprise entre 10°C et 60°C, et en ce qu'on isole le produit de la réaction sous forme de sel alcalin ou alcalino-terreux.

**Claims**

**1.** Process of depolymerising heparine having an average molecular weight between 10.000 and 20.000 dalton to produce a depolymerized product having an average molecular weight between 2.500 to 6.000 dalton characterized in that a quaternary ammonium salt of said heparine is treated with a quaternary ammonium hydroxide in a non-aqueous inert solvent, said reaction taking place at a temperature between 10°C and 60°C, and the reaction product is isolated in the form of an alkaline or earth-alkaline salt.

**Patentansprüche**

**1.** Verfahren zur Depolymerisation eines Heparins mit einem mittleren Molekulargewicht zwischen 10.000 bis 20.000 Dalton um ein depolymerisiertes Produkt eines mittleren Molekulargewichts zwischen 2.500 und 6.000 Dalton zu erhalten, dadurch gekennzeichnet, daß man ein quaternäres Ammoniumsalz des Heparins mit einem quaternären Ammoniumhydroxid in einem inerten nichtwäßrigen Lösungsmittel behandelt, die Reaktion bei einer Temperatur zwischen 10°C und 60°C durchführt, und daß man das Reaktionsprodukt in Form seines Alkali- oder Erdalkalisalzes isoliert.